Europäisches Patentamt

European Patent Office

Office européen des brevets

(11) Veröffentlichungsnummer: **0 216 211**
**A2**

(12) **EUROPÄISCHE PATENTANMELDUNG**

(21) Anmeldenummer: 86112152.3

(22) Anmeldetag: 02.09.86

(51) Int. Cl.⁴: **G02B 6/28** , H04B 9/00

(30) Priorität: 17.09.85 DE 3533148

(43) Veröffentlichungstag der Anmeldung:
01.04.87 Patentblatt 87/14

(84) Benannte Vertragsstaaten:
DE FR GB

(71) Anmelder: **Siemens Aktiengesellschaft Berlin
und München**
**Wittelsbacherplatz 2**
**D-8000 München 2(DE)**

(72) Erfinder: **Winzer, Gerhard, Dr.**
**Zugspitzstrasse 10**
**D-8011 Putzbrunn(DE)**

(54) **Wellenlängenmultiplex-Komponente für ein optisches Netz mit Monomode-Übertragsfaser.**

(57) Es wird eine Wellenlängenmultiplex-Komponent für ein optischen Breitband-ISDN-Netz mit Monomode-Übertragungsfasern beschrieben. Es soll eine unaufwendige Komponente für die bidirektionale optische Wellenlängenmultiplex-Übertragung angegeben werden. Die Komponente besteht aus einer Stablinse (5), aus einem auf der frontseitigen Stirnfläche (51) der Stablinse (5) flächig aufgebrachten wellenlängenselektiven Filter (6) und aus einem die Stablinse (5) und das Filter (6) umgebenden Steckerkörper (10). Im Steckerkörper sind auch ein Monomode-und ein Multimode-Lichtwellenleiter (7 bzw. 8) gehaltert, die mit der rückseitigen Stirnfläche (52) der Stablinse (5) stoßgekoppelt sind. Der Monomode-Lichwellenleiter (7) ist auf die optische Achse (A) der Stablinse (5) ausgerichtet. Die frontseitige Stirnfläche (51) der Stablinse (5) ist leicht zur Achse (A) geneigt und der Multimode-Lichtwellenleiter (8) verläuft parallel zum Monomode-Lichtwellenleiter (7). Die Komponente benötigt wenig Fertigungsaufwand, ist justierunempfindlich bei Installation und in Lichtwellenleiterstrecken ohne Wellenlängenmultiplex nachrüstbar.

FIG 1

# Wellenlängenmultiplex-Komponente für ein optisches Netz mit Monomode-Übertragungsfasern

Die vorliegende Erfindung betrifft eine Wellenlängenmultiplex-Komponente nach dem Oberbegriff des Patentanspruchs 1.

Komponenten der genannten Art sind beispielsweise aus G. Winzer: Wavelength Multiplexing Components -A Review of Single-Mode Devices and Their Applications, IEEE J. Lightwave Techn. LT-2/4 (1984) S. 369-378 bekannt.

Aufgabe der Erfindung ist es, eine unaufwendige Komponente der genannten Art anzugeben, die mit wenig Fertigungsaufwand herstellbar, bei der Installation justierunempfindlich und in Lichtwellenleitersteckern ohne Wellenlängenmultiplex nachrüstbar ist.

Diese Aufgabe wird gemäß dem kennzeichnenden Teil des Patentanspruchs 1 gelöst durch

-eine optische Linse,

-ein auf einer Frontseite der Linse angeordnetes wellenlängenselektives Filter,

-einen die Linse und das Filter umgebenden, von einer Steckerbuchse aufnehmbaren Steckerkörper, in dem das für eine Wellenlänge durchlässige Filter frontseitig mit für diese Wellenlänge transparentem Material abgedeckt ist, und in dem auf der Rückseite der Linse ein Monomode-und ein Multimode-Lichtwellenleiter mit der Rückseite zugekehrten linsennahen Enden derart gehaltert sind, daß aus dem linsennahen Ende des Monomode-Lichtwellenleiters austretendes Licht mit einer vom Filter reflektierten Wellenlänge durch die Linse und das Filter zumindest in der Nähe des linsennahen Endes des Multimode-Lichtwellenleiters fokussiert und in diesen Wellenleiter eingekoppelt ist,

-wobei ein linsenfernes Ende des Monomode-Lichtwellenleiters an eine Übertragungsfaser und ein linsenfernes Ende des Multimode-Lichtwellenleiters an einen optischen Detektor ankoppelbar ist.

Die erfindungsgemäße Komponente ist insbesondere für den Einsatz im optischen Breitband-ISDN-Netz (ISDN bedeutet Integrated Service Digital Network) mit Monomode-Übertragungsfasern geeignet. Sie ist besonders unaufwendig und modular in Verbindung mit jedem Sendemodul verwendbar, der einen Koppelflansch für Linsenstecker aufweist. Sie kann billig gefertigt werden. Darüber hinaus kann eine installierte Übertragungsstrecke, sofern der Sendemodul bereits einen Linsenstecker aufweist, durch Einfügen der Komponente wegen ihres modularen Aufbaus ohne wesentliche sonstige Änderungen in die bidirektionale Betriebsart gebracht werden. Der Vorteil des modularen Aufbaus der erfindungsgemäßen Komponente liegt nicht nur im unaufwendigen Aufbaukonzept, sondern vor allem auch darin, daß nicht wie sonst bei Ausfall, beispielsweise der Sendediode, die gesamte Wellenlängenmultiplex-Modul inklusive Sender und Empfänger verworfen werden muß, sondern nur die defekte Teilkomponente. Bei der Fertigung führt der modulare Aufbau entsprechend zu einer Steigerung der Ausbeute.

Für sich genommen ist die erfindungsgemäße Multiplex-Komponente bzw. WDM-Komponente im Vergleich zu den aus der genannten Literaturstelle bekannten Komponenten nur ein Fragment, das in Bezug auf die Gesamtfunktion nicht ohne spezielle Strahlformung im Sendemodul auskommt. Allerdings läßt es sich vorteilhafterweise gewissen vorgegebenen Strahlformen eines Sendemoduls in weiten Bereichen einfach anpassen.

Eine bevorzugte Ausgestaltung der erfindungsgemäßen Komponente ist gemäß dem Patentanspruch 2 so gestaltet, daß die optische Linse eine Stablinse ist, auf deren frontseitige Stirnfläche das wellenlängenselektive Filter flächig aufgebracht ist.

Eine vorteilhafte Ausgestaltung dieser Komponente ist gemäß Anspruch 3 so ausgebildet, daß ein linsennaher Endabschnitt des Monomode-Lichtwellenleiters auf die optische Achse der Stablinse ausgerichtet ist und ein linsennaher Endabschnitt des Multimode-Lichtwellenleiters parallel dazu verläuft, und daß die frontseitige Stirnfläche der Stablinse leicht zur Achse geneigt ist. Diese vorteilhafte Komponente kann in Verbindung mit einem konventionellen Lasermodul operieren, der eine Steckerbuchse mit einer Koppellinse aufweist, aus denen das von einer Laserdiode ausgesandte Licht in Richtung der Achse dieser Buchse als Parallelstrahl austritt. Die Achse der Linse der Komponente fällt bei in den Lasermodul eingestecktem Steckerteil mit der Achse von dessen Linse zusammen. Der Parallelstrahl wird auf der Rückseite der Linse der Komponente auf der Achse fokussiert. An der Stelle des Fokus ist das linsennahe Ende des Monomode-Lichtwellenleiters anzuordnen, so daß das Licht in diesen Lichtwellenleiter eingekoppelt wird. Die leichte Schrägstellung der frontseitigen Stirnfläche sorgt dafür, daß Licht mit einer vom Filter reflektierten Wellenlänge, das aus dem besagten Ende des Monomode-Lichtwellenleiters austritt, von der Linse und dem Filter etwa auf der Rückseite der Linse seitlich neben dem linsennahen Ende des MonomodeLichtwellenleiters fokussiert wird. In diesem Fokus oder zumindest in dessen Nähe ist das linsennahe Ende des Multimode-Lichtwellenleiters anzuordnen, damit dieses Licht in diesen Wellenleiter eingekoppelt wird.

Der Neigungswinkel der frontseitigen Stirnfläche der Stablinse aus der Senkrechten zur Achse sollte möglichst klein gewählt werden, um eine polarisationsunabhängige Filterwirkung zu erzielen. Seine untere Grenze ist durch den minimalen Abstand zwischen den Achsen der beiden Lichtwellenleiter gegeben.

Eine Komponente nach Anspruch 2 oder 3 ist zweckmäßigerweise nach Anspruch 4 so gestaltet, daß die Stablinse auf der Achse eine Länge aufweist, bei der achsparallel einfallendes Licht im wesentlichen auf einer Stirnfläche der Stablinse fokussiert ist, und daß die beiden Lichtwellenleiter mit der Linse stoßgekoppelt sind.

Der Steckerkörper der erfindungsgemäßen Komponente muß auf der Frontseite den ungehinderten Lichtdurchgang für das vom Lasermodul ausgesandte Licht durch das für dieses Licht durchlässige Filter zur Linse ermöglichen. Bei einer ersten Variante der erfindungsgemäßen Komponente besteht dazu nach Anspruch 5 der Steckerkörper aus für die eine Wellenlänge transparentem Kunststoffmaterial und dieser umschließt die Linse mit dem Filter und die beiden Lichtwellenleiter samt Halterung als Vergußteil.

Bei einer zweiten Variante ist die Komponente dazu so ausgebildet, daß gemäß Anspruch 6 der Steckerkörper aus einem hohlzylindrischen Metallkörper besteht, in dem die Linse mit Filter und die beiden Lichtwellenleiter samt Halterung aufgenommen sind, und der frontseitig mit transparentem Kunststoffmaterial oder einem Glasplättchen verschlossen ist. Zweckmäßigerweise ist gemäß Anspruch 7 das Kunststoffmaterial an der Frontseite des Steckerkörpers poliert.

Eine Halterung für die beiden Lichtwellenleiter besteht zeckmäßigerweise gemäß Anspruch 8 aus einem im Steckerkörper befestigten Trägerkörper, auf dem die Lichtwellenleiter fixiert sind.

Dabei können gemäß Anspruch 9 die beiden Lichtwellenleiter aus Fasern bestehen, die in Führungskanälen des Trägerkörpers fixiert sind.

Eine besonders vorteilhafte Ausgestaltung einer derartigen Komponente, bei welcher ein Empfangsmodul mit dem optischen Detektor direkt in der Komponente untergebracht werden kann, ist gemäß Anspruch 10 so ausgebildet, daß der Multimode-Lichtwellenleiter ein im Trägerkörper integrierter Wellenleiter ist. Der Trägerkörper kann vorzugsweise gemäß Anspruch 11 aus Glas bestehen, in dem der integrierte Wellenleiter ein durch Ionenaustausch erzeugter Wellenleiter ist. Zweckmäßig ist es außerdem, wenn gemäß Anspruch 12 der integrierte Wellenleiter eine Krümmung aufweist, die in einen senkrecht zur Achse der Linse verlaufenden linsenfernen Endabschnitt übergeht. Der optische Detektor ist in diesem Fall zweckmäßigerweise gemäß Anspruch 13 direkt an das linsenferne Ende des integrierten Wellenleiters angekoppelt. Bevorzugterweise besteht in jedem Fall, bei dem der Multimode-Lichtwellenleiter ein integrierter Wellenleiter ist, gemäß Anspruch 14 der Monomode-Lichtwellenleiter aus einer Faser, die in einem Führungskanal des Trägerkörpers fixiert ist.

Ausführungsbeispiele der Erfindung werden anhand der Figuren in der folgenden Beschreibung näher erläutert. Von den Figuren zeigen:

Figur 1 einen Längsschnitt durch einen - schematisch dargestellten Lasermodul mit einer daran angepaßten vorgeschlagenen Komponente,

Figur 2 einen vergrößerten Ausschnitt aus der Figur 1, der einen Teil der dort dargestellten Komponente zeigt, und

Figur 3 in einer ähnlichen Darstellung wie in Figur 2 eine Variante der Komponente nach Figur 1.

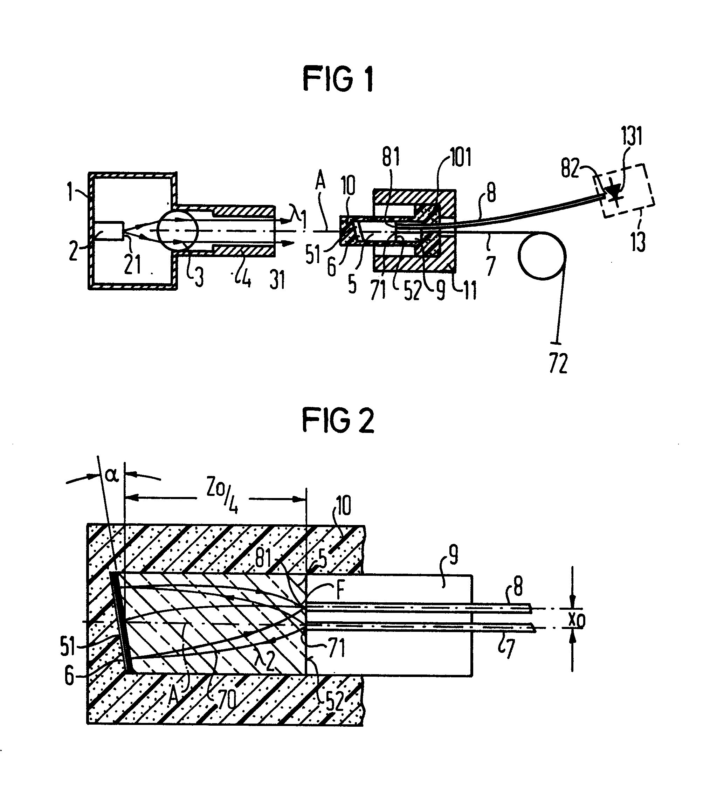

Nach Figur 1 besteht der Lasermodul aus einem Gehäuse 1 für eine Laserdiode 2, an dem eine Steckerbuchse 4 angebracht ist. In der Steckerbuchse 4 ist eine Koppellinse 3 in Form einer Kugellinse angeordnet, die beispielsweise auch eine Stablinse sein kann. Unter einer Stablinse ist ein Stab aus transparentem Material zu verstehen, der ein radiales Brechzahlprofil in Form eines Gradientenprofils derart aufweist, daß er als optische Linse wirkt. Derartige Stablinsen sind bekannt.

Die Koppellinse 3 ist so bemessen und in einem solchen Abstand von der Lichtaustrittsfläche 21 der im Gehäuse 1 befestigten Laserdiode 2 angeordnet, daß aus dieser Linse 3 und damit aus der Steckerbuchse 4 ein Parallelstrahl 31 mit der von der Laserdiode 2 ausgesandten Wellenlänge $\lambda_1$ austritt.

Die Komponente selbst besteht in ihren wesentlichen Teilen aus der Stablinse 5, dem auf die frontseitige Stirnfläche 51 flächig aufgebrachten Interferenzfilter 6 für die Separierung zweier Betriebswellenlängen $\lambda_1$ und $\lambda_2$ und dem transparenten Steckerkörper 10, der in seinem Durchmesser so bemessen ist, daß er in die Steckerbuchse 4 gesteckt werden kann. Der Steckerkörper 10 ermöglicht eine verlustarme Einkopplung in die Komponente und schützt außerdem das Filter 6. Auf der rückseitigen Stirnfläche 52 der Stablinse 5 sind die beiden Lichtleitfasern 7 und 8 angekoppelt. Die Monomodefaser 7, die ein Pigtail zu einer Streckenfaser bildet, ist auf die optische Achse A der Stablinse 5 ausgerichtet, die im zusammengesteckten Zustand des Moduls und der Komponente mit der optischen Achse A der Linse 3 zusammenfällt. Die parallel zur Achse A verlaufende Multimode-Faser 8, die als Auskoppelfaser dient, führt zu einer Fotodiode 131 eines Empfangsmoduls 13, der bei Bedarf innerhalb der Komponente angeordnet werden kann. Zweckmäßig ist für die Faser 8 die Verwendung einer Dickkernfaser, beispielsweise einer Stufenprofilfaser mit 50 μm Kerndurchmesser. Der Durchmesser sollte einseits so groß wie möglich gewählt werden, um die Kopplung mit der Linse 5 zu vereinfachen. Er ist jedoch andererseits durch die Empfangsfläche der Fotodiode 131 auf etwa 50 μm begrenzt und auch wegen der geforderten polarisationsunabhängigen Filterwirkung sowie des dementsprechend zu fordernden minimalen Abstandes zwischen den Faserachsen nicht größer zu wählen.

Die Stablinse 5 hat auf der Achse A 1/4 Pitch Länge, so daß von der Frontseite her einfallendes achsparalleles Licht der Wellenlänge $\lambda_1$, für die das Filter 6 durchlässig ist, auf der rückseitigen Stirnfläche 52 und auf der Achse A fokussiert wird. Die Linse 5 ist auf der Frontseite schräg angeschliffen, so daß ihre frontseitige Stirnfläche 51 mit einer von der Achse senkrecht durchstoßenen Ebene einen kleinen Winkel $\alpha$ einschließt und die Linse dadurch außerhalb der Achse A eine Über- bzw. Unterlänge aufweist. Auf die schräge frontseitige Stirnfläche 51 ist ganzflächig das wellenlängenselektive Filter 6 aufgebracht, das beispielsweise ein Interferenzfilter sein kann. Für bidirektionalen Übertragungsmodus sind zwei Komponenten vorzusehen, die sich im Filter unterscheiden. Die verschiedenen Filter müssen zueinander komplementär sein, d.h. ein Filter ist genau für die Wellenlänge durchlässig, für die das andere Filter undurchlässig ist und umgekehrt. Komplementäre Filter können in Form von Interferenzfiltern hergestellt werden.

Für polarisationsunabhängige Filterwirkung sollte der Winkel $\alpha$ möglichst klein gewählt werden. Seine untere Grenzen bestimmt sich aus dem seitlichen Abstand der beiden Wellenleiter 7 und 8. Sind diese Wellenleiter 7 und 8 beispielsweise Fasern, die in Führungskanälen eines Trägerkörpers 9 fixiert sind, so bestimmt sich der minimale Winkel $\alpha$ aus der minimalen Stegbreite zwischen den Führungskanälen im Trägerkörper 9 und durch den Außendurchmesser der Fasern. Die Komponente ist vorteilhafterweise unempfindlich gegen Verdrehungen der beiden Linsen um ihre gemeinsame Achse A gegeneinander. Das liegt darin, daß der Lichtwellenleiter 7, der zu einer Streckenfaser führt, auf der Achse A liegt und nur der zum Auskoppeln dienende Lichtwellenleiter 8 mit dem am linsenfernen Ende 82 fest angekoppelten Fotodetektor 131 einen Kreis um diese Achse A beschreibt. Die Sendediode 2 und der Monomode-Lichtwellenleiter 7 bleiben also bei Steckerdrehungen zueinander justiert.

Der Steckerkörper 10 muß auf seiner Frontseite den unbehinderten Lichtdurchgang vom Lasermodul zur Linse 5 ermöglichen. Bei der Ausführunsform nach Figur 1 besteht der Steckerkörper 10 aus einem für die eine Wellenlänge $\lambda_1$, transparentem Kunststoffmaterial, beispielsweise aus Epoxidharz, der Filter 6, die Linse 5 und den Trägerkörper 10 für die Lichtwellenleiter 7 und 8 als Vergußteil umschließt. Sein äußerer Durchmesser kann durch Abdrehen in einer Zentriervorrichtung auf Sollmaß gebracht werden. Er ist vorzugsweise in einem Überwurf 11 befestigt, der sich beim Zusammenstecken über die Steckerbuchse 4 schiebt.

In der Figur 2 ist die Komponente nach Figur 1 in ihren wesentlichen Teilen noch einmal vergrößert dargestellt, wobei der rückseitige, beispielsweise im Durchmesser erweitere Teil 101 des Steckerkörpers 10 durch einen Bruch im Bereich des Trägerkörpers 9 für die Fasern 7, 8 entfernt ist. In dieser Figur 2 ist auch der Strahlengang in der Linse 5 des von dem linsennahen Ende 71 der Monomodefaser 7 austretenden Lichts der anderen Wellenlänge $\lambda_2$ eingezeichnet, das vom Filter 6 reflektiert wird. Dieses Licht tritt aus dem Ende 71 als divergenter Strahl 70 aus und wird im Verlauf durch die Linse 5 allmählich zu einem Parallelstrahl gebündelt, der am schräg zur Achse A angeordneten Filter 6 reflektiert wird und beim Rücklauf durch die Linse 5 in einem Punkt F nahe bei der rückseitigen Stirnfläche 52 fokussiert wird. Dieser Punkt liegt wegen der Schrägstellung des Filters 6 in einem seitlichen Abstand $x_0$ von der Achse A der Linse und des Wellenleiters 7. Die zur Achse A parallele Multimode-Faser 8 ist in diesem Abstand $x_0$ von der Achse A so angeordnet, daß ihr linsennahes Ende 81 nahe gegenüber dem Punkt F liegt. Dadurch wird erreicht, daß das in diesem Punkt konzentrierte Licht der Wellenlänge $\lambda_2$ in die Multimode-Faser eingekoppelt wird.

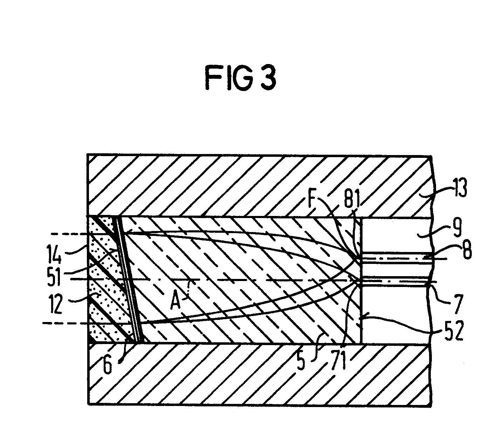

Die Figur 3 zeigt eine Variante der Komponente nach Figur 1 in einer ähnlichen Darstellung wie in Figur 2. Bei dieser Variante besteht der Steckerkörper 10 nicht aus einem Stück, sondern aus einem rohrförmigen Metall körper 13, in dem die Linse 5 mit dem Filter 6 und die beiden Fasern 7 und 8 samt Halterung 9 aufgenommen sind, und der frontseitig bis zum Filter 6 mit einem transparenten Körper 12 verschlossen ist. Der Körper 12 kann beispielsweise wieder aus transparentem Kunststoffmaterial bestehen, das an seiner frontseitigen Stirnfläche 14 zusammen mit dem Metallkörper 13 planpoliert ist. Er kann auch aus einem keilförmigen Glasplättchen bestehen, das vor dem Einbringen des Filters 6 und der Linse 5 in den Metallkörper 13 mit der Linse 5 und dem Filter 6 verkittet wird.

Soll der Empfangsmodul 13 mit der Fotodiode 131 direkt in der Komponente untergebracht werden, so ist es zweckmäßig, den Trägerkörper 9 gegenüber der in den Figuren dargestellten Ausführungsform abzuändern. Beispielsweise enthält dieser Trägerkörper 9 nur noch den Führungskanal für die Monomode-Faser 7, die zur Streckenfaser führt. Der Führungskanal mit der Multimode-Faser 8 wird durch einen im Trägerkörper 9 integrierten Wellenleiter ersetzt, beispielsweise durch einen Glaskörper, in dem durch Ionenaustausch ein geeigneter Wellenleiter erzeugt wird, der das mit dem Empfangssignal modulierte Licht beispielsweise senkrecht zur Achsrichtung der Faser 7 auf die direkt angekoppelte Empfangsdiode 131 umlenkt.

## Ansprüche

1. Wellenlängenmultiplex-Komponente für ein mit verschiedenen Wellenlängen ($\lambda_1$, $\lambda_2$) betriebenes optisches Nachrichtenübertragungsnetz mit Monomode-Übertragungsfasern, insbesondere für ein Breitband-ISDN-Netz,

**gekennzeichnet durch**

-eine optische Linse (5),

-ein auf einer Frontseite der Linse (5) angeordnetes wellenlängenselektives Filter (6),

-einen die Linse (5) und das Filter (6) umgebenden, von einer Steckerbuchse (4) aufnehmbaren Steckerkörper (10), in dem das für eine Wellenlänge - ($\lambda_1$) durchlässige Filter (6) frontseitig mit für diese Wellenlänge transparentem Material abgedeckt ist, und in dem auf der Rückseite der Linse (5) ein Monomode-und ein Multimode-Lichtwellenleiter (7 bzw. 8) mit der Linse (5) zugekehrten linsennahen Enden (71 bzw. 81) derart gehaltert sind, daß aus dem linsennahen Ende (71) des Monomode-Lichtwellenleiters (7) austretendes Licht mit einer vom Filter (6) reflektierten Wellenlänge ($\lambda_2$) durch die Linse (5) und das Filter (6) zumindest in der Nähe des linsennahen Endes (81) des Multimode-Lichtwellenleiters (8) fokussiert und in diesen Wellenleiter (8) eingekoppelt ist,

-wobei ein linsenfernes Ende (72) des Monomode-Lichtwellenleiters (7) an eine Übertragsfaser und ein linsenfernes Ende (82) des Multimode-Lichtwellenleiters (8) an einen optischen Detektor (131) ankoppelbar ist.

2. Komponente nach Anspruch 1, **dadurch gekennzeichnet**, daß die optische Linse (5) aus einer Stablinse besteht, und daß das wellenlängenselektive Filter (6) auf der frontseitigen Stirnfläche (51) der Stablinse (5) flächig aufgebracht ist.

3. Komponente nach Anspruch 2, **dadurch gekennzeichnet**, daß ein linsennaher Endabschnitt des Monomode-Lichtwellenleiters (7) auf die optische Achse (A) der Stablinse (5) ausgerichtet ist und ein linsennaher Endabschnitt des Multimode-Lichtwellenleiters (8) parallel dazu verläuft, und daß die frontseitige Stirnfläche (51) der Stablinse (5) leicht zur Achse (A) geneigt ist.

4. Komponente nach Ansprsuch 2 oder 3, **dadurch gekennzeichnet**, daß die Stablinse (5) auf der Achse (A) eine Länge aufweist, bei der achsparallel einfallendes Licht im wesentlichen auf einer Stirnfläche der Stablinse (5) fokussiert ist, und daß die beiden Lichtwellenleiter (7, 8) mit der Stablinse (5) stoßgekoppelt sind.

5. Komponente nach einem der vorhergehenden Ansprüche, **dadurch gekennzeichnet**, daß der Steckerkörper (10) aus für die eine Wellenlänge ($\lambda_1$) transparentem Kunststoffmaterial besteht und die Linse (5) mit Filter (6) und die beiden Lichtwellenleiter (7, 8) samt Halterung (9) als Vergußteil umschließt.

6. Komponente nach Anspruch 5, **dadurch gekennzeichnet**, daß der Steckerkörper (10) aus einem hohlzylindrischen Metallkörper (13) besteht, in dem die Linse (5) mit Filter (6) und die beiden Lichtwellenleiter (7, 8) samt Halterung (9) aufgenommen sind, und der frontseitig mit transparentem Kunststoffmaterial (12) oder einem Glasplättchen verschlossen ist.

7. Komponente nach Anspruch 5 oder 6, **dadurch gekennzeichnet**, daß das Kunststoffmaterial an der Frontseite des Steckerkörpers (10) poliert ist.

8. Komponente nach einem der vorhergehenden Ansprüche, **dadurch gekennzeichnet**, daß eine Halterung für die beiden Lichtwellenleiter (7, 8) aus einem im Steckerkörper (10) befestigten Trägerkörper (9) besteht, auf dem die Lichtwellenleiter (7, 8) fixiert sind.

9. Komponente nach Anspruch 8, **dadurch gekennzeichnet**, daß die beiden Lichtwellenleiter (7, 8) aus Fasern bestehen, die in Führungskanälen des Trägerkörpers (9) fixiert sind.

10. Komponente nach Anspruch 8, **dadurch gekennzeichnet**, daß der Multimode-Lichtwellenleiter (8) ein im Trägerkörper (9) integrierter Wellenleiter ist.

11. Komponente nach Anspruch 10, **dadurch gekennzeichnet**, daß der Trägerkörper aus Glas besteht, in dem der integrierte Wellenleiter ein durch Ionenaustausch erzeugter Wellenleiter ist.

12. Komponente nach Anspruch 10 oder 11, **dadurch gekennzeichnet**, daß der integrierte Wellenleiter eine Krümmung aufweist, die in einen senkrecht zur Achse (A) der Linse (5) verlaufenden linsenfernen Endabschnitt übergeht.

13. Komponente nach Anspruch 12, **dadurch gekennzeichnet**, daß der optische Detektor (131) direkt an das linsenferne Ende des integrierten Wellenleiters angekoppelt ist.

14. Komponente nach einem der Ansprüche 11 bis 13, **dadurch gekennzeichnet**, daß der Monomode-Lichtwellenleiter (7) aus einer Faser besteht, die in einem Führungskanal des Trägerkörpers (9) fixiert ist.

# FIG 1

# FIG 2

## FIG 3